# EUROPEAN PATENT SPECIFICATION

(11) **EP 2 552 064 B1**
(45) Date of publication and mention of the grant of the patent: **18.06.2014**
(21) Application number: 12172371.2
(22) Date of filing: 18.06.2012
(51) Int. Cl.: H04L 12/26, H04L 12/70

(54) **Processing apparatus, test signal generator, and method of generating test signal**
Verarbeitungsvorrichtung, Testsignalgenerator und Verfahren zur Erzeugung eines Testsignals
Appareil de traitement, générateur de signal d'essai et procédé de génération de signal d'essai

(30) Priority: 27.07.2011 JP 2011164428
(43) Date of publication of application: 30.01.2013
(73) Proprietor: FUJITSU LIMITED, Kawasaki-shi, Kanagawa 211-8588 (JP)
(72) Inventor: Iwasaki, Shinichi, Kanagawa, 211-8588 (JP)
(74) Representative: HOFFMANN EITLE

(56) References cited:
- WO-A1-2006/102241
- US-A1- 2009 119 054
- US-A1- 2009 143 020

## Description

### FIELD

The embodiment discussed herein is directed to a processing apparatus, a test signal generator, and a method of generating a test signal.

### BACKGROUND

In recent years, the data transfer speed inside an information processing apparatuses has constantly risen, and any degradation in the data transfer quality may incur a deteriorated processing capacity of the system as a whole. A lot of factors may cause data transfer errors inside an information processing apparatus, and communication patterns and communication timing of packets may cause to data transfer errors, for example.

One known technique for achieving improvement in the data transfer quality inside an information processing apparatus is a load test. In this test, the stability of the operation of the information processing apparatuses is tested while driving it overload.

A load test is executed by executing a load test program during manufacturing of information processing apparatuses, for example, for checking the qualities of data transfer paths inside the information processing apparatuses.

In conventional load test as described above, however, a sufficient load may not be applied to a device, e.g., interface chip, downstream to a packet flow on which packet is propagated, in an information processing apparatus, for example.

Patent Document 1: Japanese Laid-open Patent Publication No. 2006-94088. US 2009/0143020 A1 describes a load testing system wherein a transmission device measures a bandwidth of user data transmitted from a user terminal in real time. A calculation bandwidth is calculated by subtracting the bandwidth of the user data from an evaluation bandwidth to evaluate performance of a network. Test data are transmitted corresponding to the calculation bandwidth.

### SUMMARY

An object of the present disclosure is to provide a technique which can load an tested target effectively during a load test.

Note that it is another object of the present invention to provide advantages and effects that can be obtained by the best modes to implement the invention described below but cannot be obtained with conventional techniques.

This object is solved by the subject-matter of the independent claims. Advantageous embodiments are disclosed by the dependent claims.

Accordingly, a disclosed processing apparatus includes: a counter that counts a count value used for a flow control; a first test signal output terminal that outputs a plurality of first test signals continuously in response to a test start instruction; a decision maker that determines whether or not the first test signals are being input to a tested portion; a second test signal output terminal that outputs a second test signal if the decision maker determines that the first test signals are not being input; and an increment processor that increments a count value stored in the counter in sync with the second test signal.

Further, a disclosed test signal generator includes: a first test signal receiver that receives first test signals continuously output from a first test signal output terminal in response to a test start instruction; a second test signal output terminal that outputs a second test signal when the first test signal receiver is not receiving the first test signals; and an increment processor that increments a count value stored by a counter that counts the count value used for flow control, in sync with the second test signal.

Further, a method of generating a test signal includes: receiving a plurality of first test signals continuously output from a first test signal output terminal in response to a test start instruction; determining whether or not the first test signals are being input to a tested portion; outputting a second test signal when the first test signals are not received; and incrementing a count value stored by a counter that counts the count value used for flow control, in sync with the second test signal.

In accordance with a disclosed technique, a load test can be effectively performed.

### BRIEF DESCRIPTION OF THE DRAWINGS

FIG. 1 is a diagram schematically illustrating a functional configuration of a test signal generation circuit provided in a processor as an example of an embodiment;
FIG. 2 is a diagram schematically illustrating an example of a hardware configuration of a processor as an example of an embodiment;
FIG. 3 is a diagram illustrating a functional configuration of a credit flow section in a processor system provided with a processor as an example of an embodiment;
FIGs.4A and B are sequence charts illustrating a test packet signals in the processor as an example of an embodiment;
FIG. 5 is a diagram illustrating the connections and input and output signals in test signal generation circuit in the processor as an example of an embodiment;
FIG. 6 is a state transition diagram of the test signal generation circuit in the processor as an example of an embodiment during a load test; and
FIG. 7 is a flow chart illustrating processing during the load test in the processor as an example of an embodiment.

### DESCRIPTION OF EMBODIMENT(S)

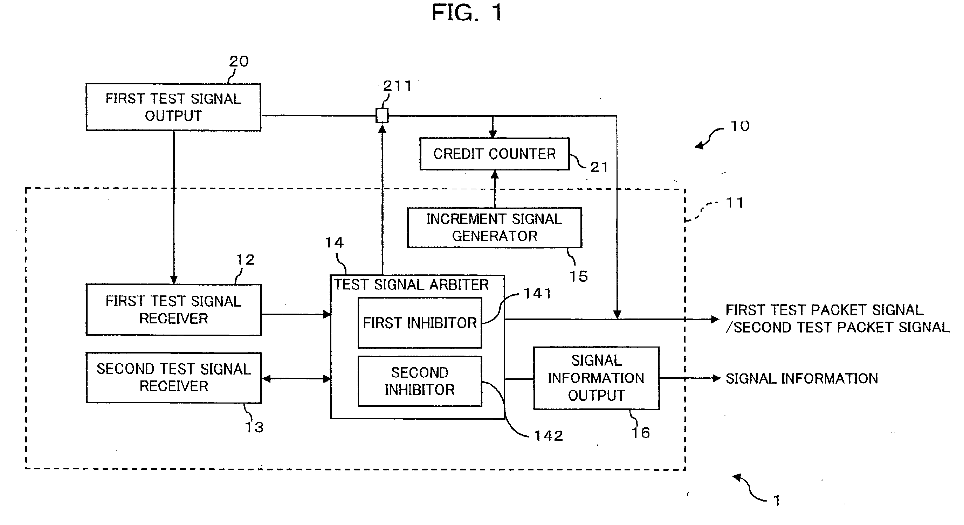

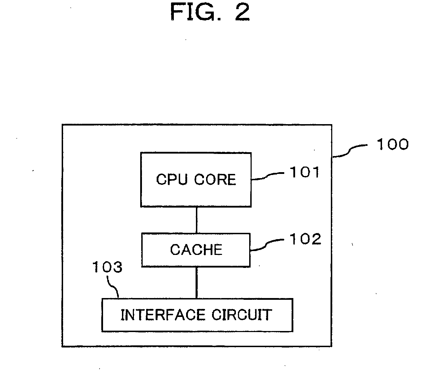

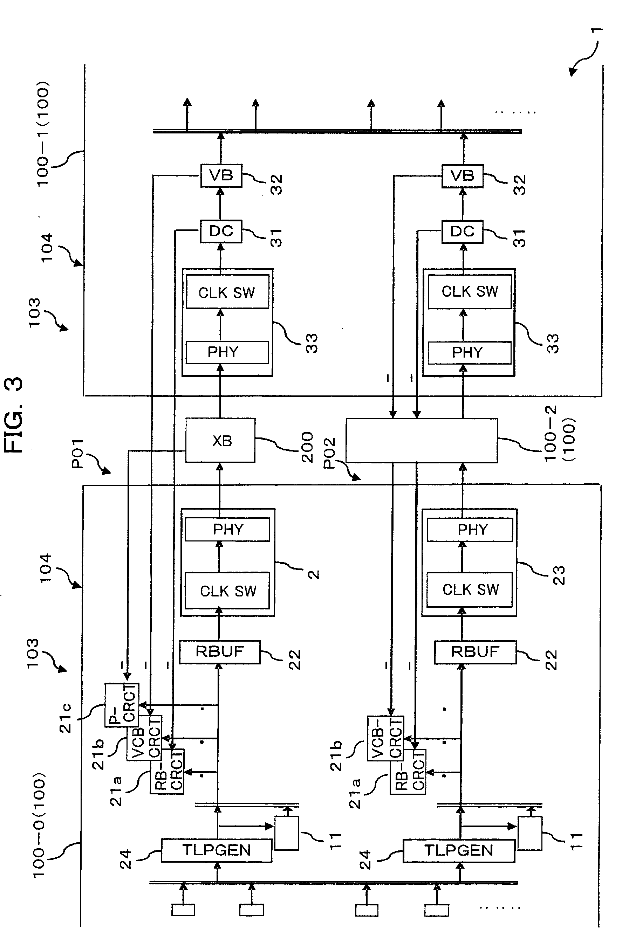

Hereinafter, an embodiment of a processing apparatus, a test signal generator, and a method of generating a test signal will be described with reference to the drawings. Note that the embodiment below is described by way of example only, and various modifications and applications of techniques that are not shown explicitly in the embodiments illustrated below are not intended to be excluded. FIG. 1 is a diagram schematically illustrating a functional configuration of a test signal generation circuit (test signal generator) provided in a processor as an example of an embodiment, and FIG. 2 is a diagram schematically illustrating a hardware configuration thereof. FIG. 3 is a diagram illustrating a functional configuration of a credit flow section 104 in a processor system 1 provided with a processor 100 as an example of an embodiment.

Here, the credit flow section 104 is a controller to control packets by means of a credit control. As used herein, the term "credit control" refers to a control on packets using a credit value. The term "credit value" refers to a value to define the count of asynchronous transfer mode (ATM) cells that can be transmitted continuously on a virtual channel (VC).

In a credit control, transmission of packets is controlled according to the status of processing on packets in a receiver. More specifically, credit counters 21 that store credit values are used, as will be described later, and the credit values in the credit counters 21 are incremented when a packet is sent. The credit values are decremented once processing on a packet is completed in a receiver. If the credit values in the credit counters 21 exceed a predetermined value, a receiver determines that the packet count exceeds the maximum acceptable packet count and inhibits further transmission of packets.

A processor 100 as an example of an embodiment performs wide variety of computations and controls to embody various functions, by executing a program (task, job) stored in a storage apparatus, such as a memory, which is not illustrated. The processor 100 is provided in an information processing apparatus or a control apparatus, for example. The processor 100 is mounted on a motherboard (not illustrated) in such an information processing apparatus or control apparatus.

The processor 100 includes a CPU (Central Processing Unit) core 101, a cache 102, and an interface circuit 103, as depicted in FIG. 2.

The CPU core 101 is a processor core that performs a wide variety of computations and controls. The cache 102 is a storage that temporarily stores data and the like, used in the CPU core 101.

Although one CPU core 101 and one cache 102 are illustrated for the purpose of simplicity in the example depicted in FIG. 2, this is not limiting and two or more CPU cores 101 and/or caches 102 may be provided.

The interface circuit 103 is for sending and receiving data between the processor 100 and external devices. In other words, the processor 100 is connected to the external devices via the interface circuit 103. For example, the processor 100 communicates with other processors 100 directly or via a cross bar 200.

In the example depicted in FIG. 3, which will be described later, three or more processors 100 (processors 100-0, 100-1, and 100-2) are connected to each other directly or via a cross bar (XB) 200 in a processor system 1.

More specifically, the processor 100-0 is connected to the processor 100-1 from the port P01 via a cross bar 200. Further, the port P02 is connected to the processor 100-1 via the processor 100-2.

Further, the cross bar 200 is further connected to one or more processors 100, which are not illustrated.

Although two ports, i.e., the ports P01 and P02, are illustrated in FIG. 3, this is not limiting. One or three or more ports may be provided, each of which may be connected to other processors 100 and the like, directly or via the cross bar 200.

Further, although the portions of the three processors 100-0 to 100-2 are illustrated in the processor system 1 in FIG. 3, this is not limiting, and one, two, or four or more processors 100 may be provided.

Note that the characters 100-0 to 100-2 are used hereinafter for referring to a specific one processor while the character 100 is used when reference is made to any of the processors.

In this processor 100, first test packet signals (first test signals) are output when a test signal output program is executed in the CPU core 101. In other words, the test signal output program makes the CPU core 101 function as a first test signal output terminal 20 (refer to FIG. 1) that outputs the first test packet signal by the test signal output program. The test signal output program is executed when a load test on this processor system 1 is started, and continues to output first test packet signals during execution of the load test. The load test is started in response to an instruction to start the test, which is received through an input device, e.g., a keyboard, which is not illustrated.

The output first test packet signals flow through a packet flow (e.g., a data bus) in the processor 100 downstream to the CPU core 101, and reach the interface circuit 103 downstream to the packet flow. The first test packet signals are then output from the interface circuit 103, to another processor 100 or the cross bar 200 external to the processor 100.

An embodiment will be described with reference to an example wherein a load test is performed on components in the interface circuit 103 downstream to the packet flow downstream to the CPU core 101.

A first test packet signals is a combination of multiple types of pattern signals, e.g., signals with a predetermined bit length (for example, 64 bits) and data structure. These pattern signals are stored in a memory which is not illustrated, for example.

A first test packet signals have three parts of pattern signals, e.g., start, intermediate, and last parts, and one or more intermediate parts of pattern signals are interposed between the first and last parts, for example. Each pattern signal in the start, intermediate, and lasts is 8 byte data, for example, and the bit count of a first test packet signal is modified by adjusting the count of intermediate parts arranged between the first and last parts. The count of intermediate parts arranged between the first and last parts may be varied appropriately in the first test signal output terminal 12.

The CPU core 101 outputs a first test packet signal by reading the pattern signals stored and combining them appropriately.

A first test packet signal generated by combining the pattern signals may be a combination of multiple types of first test packet signals.

For example, the CPU core 101 may generate two or more first test packet signals by selecting any combination of stored pattern signals, and output them one after another as a first test packet signal. Alternatively, the CPU core 101 may select one pattern signal from the stored multiple types of pattern signals, and may repeatedly output this signal, as a first test packet signal.

Note that the selection of a first test packet signal from the multiple types of first test packet signals may be a random selection or a selection based on a predetermined order from the multiple types of first test packet signals.

A wide variety of test signals used in well-known credit flow control techniques may be used as a first test packet signal (pattern signals), and their description will be omitted.

The output first test packet signals are sent from each interface, are then sent to the interface circuit 103 via an arbiter which is not illustrated, and are then output from the processor 100 via the credit flow section 104. The first test packet signals output by the CPU core 101 may be delayed in the packet flow until they reach the interface circuit 103 due to a wide variety of factors. As a result, the first test packet signals may intermittently reach the interface circuit 103 downstream to the packet flow, and some time interval may be generated between continuous first test packet signals.

The interface circuit 103 sends and receives data by dividing it into multiple packets, for example. The interface circuit 103 includes a credit flow section 104. The credit flow section 104 performs a credit flow control for controlling transmission packets, based on the status of processing on received data (packets) in a receiving processor 100.

The credit flow section 104 includes a credit counter 21, a transaction layer packet (TLP) generator (TLPGEN) 24, a retransmission buffer (RBUF) 22, a transmission controller 23, a test signal generation circuit 11, a reception controller 33, a data link layer packet (DLLP) checker (DC) 31, and a virtual channel (VC) buffer (VB) 32, as depicted in FIG. 3.

Each functional element included in the interface circuit 103 is provided to every processor 100. In the example depicted in FIG. 3, however, for the sake of simplicity, the credit counters 21, the TLP generator 24, the retransmission buffer 22, the transmission controller 23, and test signal generation circuit 11 are illustrated in the processor 100-0, whereas the reception controller 33, the DLLP checker 31, and the VC buffer 32 are illustrated in the processor 100-1.

The TLP generator 24 appends a start TLP (STP) indicating a start of a frame, to a packet. First test packet signals output by the CPU core 101 are input to the TLP generator 24 via an arbiter which is not illustrated.

The retransmission buffer 22 is a buffer for storing transmission packets. If a destination processor 100 fails to receive a packet and a negative acknowledgement (NACK) is sent from the VC buffer 32 in that processor 100, the corresponding packet stored in the retransmission buffer 22 is retransmitted.

The transmission controller 23 appends a cyclic redundancy check (CRC) code to a packet to be sent, and switches clocks (CLKs) for sending the packet on the physical layer.

The reception controller 33 performs processing, e.g., clock switching, on a packet received on the physical layer, to allow the packet to be processed on the datalink or transaction layer.

The DLLP checker 31 checks a sequence number (SEQ-NUM) in a packet processed by the reception controller 33, and sends the sequence number that can be received as an acknowledgement (ACK), to a sender processor 100. When the reception of a packet fails (due to a CRC error or the like), the DLLP checker 31 sends the sequence number of a packet immediately precedent to the failed packet, as an NACK, to a sender processor 100.

If an NACK is received from the VC buffer 32 in the counterpart processor 100, the credit flow section 104 in a sender processor 100 performs retransmission processing of the packet.

The VC buffer 32 is a buffer for temporarily storing a received packet. When a packet stored in the VC buffer 32 is sent and a resource of the VC buffer 32 is released, the VC buffer 32 sends, to a sender processor 100, a flow control-update (FC-update) informing that the resource of the VC buffer 32 is released. In other words, the VC buffer 32 sends an FC-update to the credit flow section 104 in the processor 100 if the packet stored in the VC buffer 32 is sent to a subsequent step and the VC buffer 32 can accept a new packet.

The credit counter (CRCT) 21 is a counter that is incremented according to the data count or packet count in a packet that is sent, and is configured as a buffer for storing the incremented count value (credit value). That is, the count values (credit values) in the credit counters 21 are incremented by a predetermined magnitude every time an output packet is stored in the retransmission buffer 22.

The credit flow section 104 includes one or more credit counters 21, and a credit flow control is achieved using these credit counters 21. In other words, the credit counters 21 are used for a credit flow control.

The credit values in the credit counters 21 are decremented when a packet is processed in a receiving processor 100 or the like. In a credit flow control, if the credit values in the credit counters 21 exceed a predetermined value, a receiving processor 100 determines that the packet counts exceeds the maximum acceptable packet count and inhibits further transmission of packets.

In the example depicted in FIG. 3, a retransmission buffer credit counter (RB-CRCT) 21 a, a VC buffer credit counter (VCB-CRCT) 21 b, and a packet credit counter (P-CRCT) 21 c are provided in the port P01 as the credit counters 21. A retransmission buffer credit counter 21 a and a VC buffer credit counter (VCB-CRCT) 21 b are provided in the port P02 as the credit counters 21.

A retransmission buffer credit counter 21 a is a counter supporting a DLLP checker 31 in another processor 100, and the count value therein is decremented every time an ACK is sent from this DLLP check 31.

The VC buffer credit counters 21 b is a counter supporting a VC buffer 32 in the other processor 100, and the count value therein is decremented when an FC-update is received from that VC buffer 32

The packet credit counter 21 c is a counter supporting the cross bar 200, and the count value therein is decremented every time a notification of a packet transmission completion is sent from the cross bar 200.

In an embodiment, the retransmission buffer credit counter 21 a, the VC buffer credit counter 21 b and the packet credit counter 21 c are respectively increment or decremented in response to a 4-bit increment signal.

A test signal generation circuit 11 generates second test signals that assist first test signals. The test signal generation circuit 11 includes a first test signal receiver 12, a second test signal output terminal 13, a test signal arbiter 14, an increment signal generator (increment processor) 15, and a signal information output 16, as depicted in FIG. 1.

The first test signal receiver 12 receives a first test packet signal output by the CPU core 101.

The second test signal output terminal 13 outputs a second test packet signal (second test signal). A second test packet signal includes a data length and a data structure that are similar to those of a first test packet signal. In other words, a second test packet signal is a combination of multiple types of pattern signals, e.g., signals with a predetermined bit length (for example, 64 bits) and data structure. The pattern signals are stored in a memory which is not illustrated, for example.

A second test packet signal has three parts of pattern signal, e.g., start, intermediate, and last parts, and one or more intermediate parts of pattern signal are interposed between the first and last parts, for example. Each pattern signal in the start, intermediate, and lasts is 8 byte data, for example, and the bit count of a second test packet signal is modified by adjusting the count of intermediate parts arranged between the first and last parts. The count of intermediate parts arranged between the first and last parts may be varied appropriately in the second test signal output terminal 13.

The count of intermediate parts arranged between the first and last parts i the second test signal output terminal 13 is set with a signal P_JIR_OVL, which will be described later, as a setting parameter (packet size).

The second test signal output terminal 13 outputs a second test packet signal by reading the pattern signals stored and combining them appropriately.

A second test packet signal generated by combining the pattern signals may be multiple types of second test packet signals.

For example, the second test signal output terminal 13 may generate two or more second test packet signal by selecting any combination of stored pattern signals, and output them one after another as a second test packet signal. Alternatively, the second test signal output terminal 13 may select one pattern signal from the stored multiple types of pattern signals, and may repeatedly output this signal, as a second test packet signal.

Note that the selection of a second test packet signal from the multiple types of second test packet signals may be a random selection or a selection based on a predetermined order from the multiple types of second test packet signals.

A wide variety of test signals used in any known credit flow control technique may be used as a second test packet signal (pattern signal), and their description will be omitted.

The test signal arbiter 14 arbitrates (controls) to allow a second test packet signal to be output while no first test packet signal is output. The test signal arbiter 14 includes a first inhibitor 141 and a second inhibitor 142, as depicted in FIG. 1.

The second inhibitor 142 inhibits a first test signal from being output while the second test signal output terminal 13 outputs a second test packet signal. For example, the second inhibitor 142 inhibits a first test packet signal from being output to a tested bus (tested portion) downstream to the test signal generation circuit 11, by outputting an inhibition control signal to the switch circuit 211 (refer to FIG. 1) that controls the output of the first test packet signal. Stated differently, the second inhibitor 142 inhibits a first test packet signal from being input to the retransmission buffer 22 or the credit counters 21.

Thereby, even when first test packet signals output from the CPU core 101 reach a tested bus while a second test packet signal is being output, an output of the first test packet signals to the tested bus is inhibited. That is, the first test packet signals are inhibited from being input to the tested bus while the second test packet signal is being input to the tested bus, which prevents any interference and the like between the first and second test packet signals.

First test signal which is inhibited from being output from the second inhibitor 142 (switch circuit 211) is temporarily stored sequentially in a buffer, which is not illustrated. Once the inhibition by the second inhibitor 142 is eliminated, outputs of the first test packet signals stored in this buffer are resumed and are sequentially input to the retransmission buffer 22 or the credit counters 21.

In this manner, the test signal arbiter 14 inhibits a second test packet signal from being output while a first test packet signal is being input, whereas allows a second test packet signal to be output while no first test packet signal is being input (during an interval).

Further, a test signal arbiter (decision maker) 14 checks whether a first test packet receiver 12 is receiving a first test packet signal output by the CPU core 101, and determines whether or not a first test packet signal is being input. Specifically, the test signal arbiter 14 checks whether or not a first test packet signal is being input by checking a signal P_PRI, which will be described later.

The first inhibitor 141 inhibits a second test signal from being output by the second test signal generator 13 while the first test signal output terminal 20 outputs a first test packet signal. For example, the first inhibitor 141 inhibits a second test signal from being output by outputting an inhibition control signal to a switch circuit (not illustrated) controlling an output of a second test packet signal.

Thereby, an output of the second test packet signal on the tested bus is inhibited while a first test packet signal is output on the tested bus. That is, the first test packet signals and the second test packet signals are inhibited from being input to the tested bus simultaneously, which prevents any interference and the like between the first and second test packet signals.

A second test signal which is inhibited from being output by the first inhibitor 141 may be discarded, or may be temporarily stored in a buffer, which is not illustrated, in sequence.

That is, the test signal arbiter 14 generates a test signal having a second test packet signal is interposed in an interval between first test packet signals.

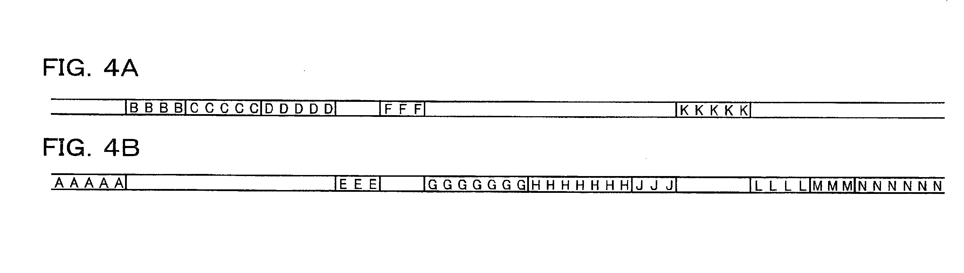

FIGs. 4A and 4B are sequence charts illustrating a test packet signals in the processor 100 as an example of an embodiment, illustrating first and second test packet signals downstream to the test signal generation circuit 11 on a tested data bus. FIG. 4A is a sequence chart illustrating a first test packet signal, whereas FIG. 4B is a sequence chart illustrating a second test packet signal.

In FIGs. 4A and B, the respective characters A-N represent pattern signals, indicating the first and second test packet signals with combinations of continuous three or more characters A-N. In the example depicted in FIGs. 4A and B, annotations of start, intermediate, and last parts in the pattern signals included in the first and second test packet signals are omitted for the sake of simplicity.

For example, in FIG. 4A, four continuous characters "BBBB" indicate a first test packet signal, wherein the first test packet signal "BBBB" includes one start pattern signal B, one last pattern signal B, and two pattern signals B.

In the example depicted in FIG. 4A, first test packet signals "BBBB", "CCCCC", "DDDDD", "FFF", and "KKKKK" with certain data sizes are intermittently output. There are intervals between these first test packet signals and preceding and/or subsequent first test packet signals, before the first test packet signal "BBBB", before and after the first test packet signal "FFF", and after the first test packet signal "KKKKK".

The test signal arbiter 14 outputs second test packet signals as depicted in FIG. 4B when the first test packet signals as depicted in FIG. 4A are not output.

In the example depicted in FIG. 4B, a second test packet signal "AAAAA" is output precedent to the first test packet signal "BBBB". Further, a second test packet signal "EEE" is output between the first test packet signal "DDDDD" and the first test packet signal "FFF", and second test packet signals "GGGGGGG", "HHHHHHH", and "JJJ" are continuously output between the first test packet signal "FFF" and the first test packet signal "KKKKK". Additionally, second test packet signals "LLLL", "MMM", and "NNNNNN" are output after the first test packet signal "KKKKK".

An increment signal generator (increment processor) 15 generates an increment signal in sync with an output of a second test packet signal, and sends the generate increment signal to the respective credit counters 21. In other words, the increment signal generator 15 increments the credit values in the credit counters 21 every time a second test packet signal is output.

An increment of the credit counters 21 by the increment signal generator 15 is done in the manner similar to the increment of the credit counters 21 in response to a first test packet signal. For example, a magnitude of increment in a single increment the credit values in the credit counters 21 are the same as the magnitude of increment of the credit counters 21 in response to a first test packet signal. Further, the increment signal generator 15 increments the credit counters 21 that are also incremented in response to a first test packet signal. In other words, the increment signal generator 15 generates an increment signal for incrementing the respective credit counters 21, when a second test packet signal is send, similarly to when a first test packet signal is sent.

In the example depicted in FIG. 3, in the test signal generation circuit 11 provided in the port P01, the increment signal generator 15 inputs an increment signal for the retransmission buffer credit counter 21 a, the VC buffer credit counter 21 b, and the packet credit counter 21c. Further, in the test signal generation circuit 11 provided in the port P02, the increment signal generator 15 inputs an increment signal for the retransmission buffer credit counter 21 a and the VC buffer credit counter 21 b. In response to these increment signals, the credit values in the respective credit counters 21 are incremented.

The credit values in the respective credit counters 21 are decremented when a packet is processed in a receiving processor 100 or the like, for a second test packet signal in the manner similar to a first test packet signal.

More specifically, when a second test packet signal is processed in the cross bar 200 or another processor 100, a notification of packet transfer completion from the cross bar 200, or an ACK or FC-update from the DLLP checker 31 or the VC buffer 32 in the other processor 100, is sent. In response to such a response signal, the related count values are decremented in the retransmission buffer credit counter 21 a, the VC buffer credit counter 21 b, and/or the packet credit counter 21 c.

In other words, in this processor 100, a credit flow control is performed appropriately on a second test packet signal, similarly to first test packet signals.

The signal information output 16 outputs signal information indicating whether a first or second test packet signal is being outputs. A determination as to whether the signal stored in the retransmission buffer 22 is a first or second test packet signal can be made from the signal information. In this processor system 1, a second test packet signal is selectively deleted once the second test packet signal passes through a credit flow controller 104 in a receiving processor 100 and an arbitration is made downstream to the VC buffer 32. This permits generation of a second test packet signal without knowing the real memory space in a receiving processor 100, thereby allowing the second test packet signal to coexist with a first test packet signal output by the CPU core 101.

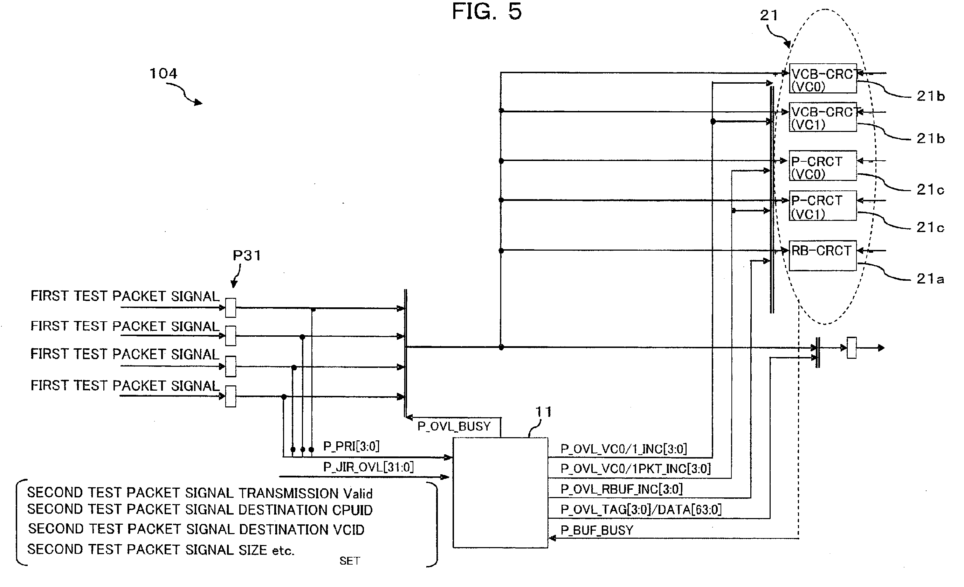

FIG. 5 is a diagram illustrating the connections and input and output signals in the test signal generation circuit 11. Note that first test packet signals are input via four input Ports P31 in the example depicted in FIG. 5. Further, the virtual channel count (VC count) is two, and two VC buffer credit counters 21 b are provided for VC0 and VC1, as well as two packet credit counters 21 c for VC0 and VC1.

Signals P_PRI[3:0], P_JIR_OVL[31:0], and P_BUF_BUSY are input to the test signal generation circuit 11, as depicted in FIG. 5.

A first test packet signal output by the CPU core 101 is input through the input ports P31, and then input to the test signal generation circuit 11 as a 4-bit signal P_PRI.

The signal P_PRI is a signal to make a first test packet signal to participate in an arbitration, and a determination that the first test packet signal is being input can be made if any bit is "1". That is, in the test signal generation circuit 11, the test signal arbiter 14 functions as a decision maker that determines whether or not first test signals are being input to the tested portion by checking the signal P_PRI.

If any bit of the signal P_PRI is "1", an output of a second test packet signal is inhibited. That is, the signal P_PRI makes the test signal generation circuit 11 function as the first inhibitor 141 (the test signal arbiter 14).

The signal P_JIR_OVL is a 32-bit control signal from a JTAG (Joint Test Architecture Group) control circuit, which is not illustrated, for example, for setting parameters for second test packet signals. For example, the signal P_JIR_OVL sets a second test packet signal transmission valid, a processor ID indicating a destination processor 100 of the second test packet signal, a virtual channel identification (VC ID) that is an identifier for identifying a VC for sending the second test packet signal, and the packet size of the second test packet signal. The signal P_JIR_OVL is input from an input port, which is not illustrated.

In this processor 100, input timing, packet types, and the like, of second test packet signals can be easily set to any values by setting the value of the signal P_JIR_OVL. In other words, desired second test packet signals can be easily generated and make them input to the credit flow section 104.

The signal P_BUF_BUSY is a buffer busy signal output from the credit counters 21. The value "1" is set to P_BUF_BUSY when any of the credit counters 21 (the retransmission buffer credit counter 21 a, the VC buffer credit counter 21 b and the packet credit counter 21 c) is busy, for example. If any of the credit counters 21 is busy, the test signal generation circuit 11 does not send a second test packet signal.

Further, the test signal generation circuit 11 outputs signals P_OVL TAG[3:0], P_OVL_DATA[63:0], P_OVL_VC0_INC[3:0], P_OVL_VC1_INC[3:0], P_OVL_VCOPKT_INC[3:0], P_OVL_VC1 PKT_INC[3:0], P_OVL_RBUF_INC[3:0], and P_OVL_BUSY, as depicted in FIG. 5.

The signal P_OVL_TAG is an identifier for a second test packet signal, and has a 4-bit length, for example.
The value "0001" of the signal P_OVL_TAG indicates that the first eight bytes include data, whereas the value "1000" indicates that the last eight bytes include data. The value of "0100" indicates that packet data of intermediate eight bytes is being sent. This signal P_OVL_TAG makes the test signal generation circuit 11 function as the signal information output 16.

The signal P_OVL_DATA is a 64-bit second test packet signal. The signals P_OVL_VC0_INC and P_OVL_VC1_INC are increment signals for the VC buffer credit counter 21 b when a second test packet signal is sent, and has a 4-bit length, for example. The signals P_OVL_VC0_INC and P_OVL_VC1_INC are input to the VC buffer credit counter 21 b (VC0 and VC1).

The signals P_OVL_VCOPKT_INC and P_OVL_VC1PKT_INC are increment signals for the packet credit counter 21 c when a second test packet signal is sent, and has a 4-bit length, for example. The signals P_OVL_VC0PKT_INC and P_OVL_VC1PKT_INC are input to the packet credit counter 21 c (VC0 and VC1).

The signal P_OVL_RBUF_INC is an increment signal for the retransmission buffer credit counter 21 a when a second test packet signal is sent, and has a 4-bit length, for example. The signal P_OVL_RBUF_INC is input to the retransmission buffer credit counter 21 a.

These signals P_OVL_VC0_INC and P_OVL_VC1_INC, P_OVL_VC0PKT_INC and P_OVL_VC1PKT_INC, and P_OVL_RBUF_INC make the test signal generation circuit 11 function as the increment signal generator 15.

The signal P_OVL_BUSY inhibits participation of a first test packet signal to an arbitration, which makes the test signal generation circuit 11 function as the second inhibitor 142 (test signal arbiter 14). The signal P_OVL_BUSY is output while a second test packet signal is being sent.

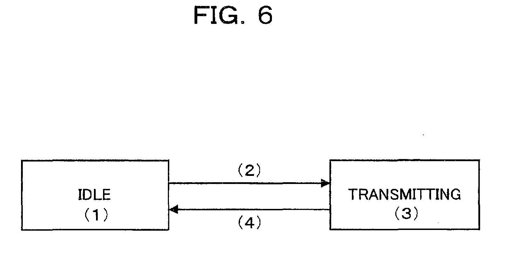

The state transition during a load test on the test signal generation circuit 11 in a processor 100 configured as described above, as an example of an embodiment, will be described with reference to a state transition diagram depicted in FIG. 6.

In the example depicted in FIG. 6, the test signal generation circuit 11 transitions between two states, i.e., idle and transmitting states.
(1) In the idle state, the test signal generation circuit 11 waits until a second test packet signal is sent.
(2) In the idle state, once all of the following conditions are met: no first test packet signal is being sent (P_PRI = 0); the credit counters 21 are not in the buffer busy state (i.e., P_BUF_BUSY = 0); and the second test packet signal transmission valid is enabled, the test signal generation circuit 11 transitions to the transmitting a second test packet signal (transmitting) state.
(3) In the transmitting state, the test signal generation circuit 11 sends a second test packet signal (P_OVL_TAG[3:0] and P_OVL_DATA[63:0]) to the credit flow section 104. Further, the increment signal generator 15 increments the respective credit counters 21 by outputting the signals P_OVL_VC0_INC and P_OVL_VC1_INC, P_OVL_VCOPKT_INC and P_OVL_VC1 PKT_INC, and P_OVL_RBUF_INC. In response, the second inhibitor 142 (the test signal arbiter 14) inhibits a first test packet signal from being input to the credit flow section 104 by outputting the signal P_OVL_BUSY to the switch circuit 211.
(4) In the transmitting state, if any of the following conditions is met: a first test packet signal is being received (P_PRI[3:0] ≠ 0); the credit counters 21 are in the buffer busy state (P_BUF_BUSY = 1); and the second test packet signal valid is disabled, the test signal generation circuit 11 transitions to the idle state.

Next, a credit flow control in a processor system 1 including a processor 100 as an example of an embodiment will be described with reference to FIG. 3. Here, an example wherein a load test is performed on a packet transmission from a processor 100-0 to a processor 100-1.

In the sender processor 100 (100-0), a first test packet signal output by the CPU core 101 is input to the TLP generator 24 via an arbiter which is not illustrated. The TLP generator 24 appends an STP to the first test packet signal. Thereafter, the credit counters 21 are incremented, depending on the packet length of the first test packet signal.

After the increment of the credit counters 21, the first test packet signal is stored-and-forwarded to the retransmission buffer 22, wherein a CRC is appended and CLKs are switched by the transmission controller 23, for transmitting the first test packet signal on the physical layer. Thereafter, the first test packet signal is sent from the port P01 or the port P02.

Further, the test signal generation circuit 11 is in the idle state while the first test packet signal is being output.

Then, once all of the following conditions are met: no first test packet signal is being sent; the credit counters 21 are not in the buffer busy state, and the second test packet signal transmission valid is enabled, that is, it is detected that the conditions to send a second test packet signal are met, the test signal generation circuit 11 initiates transmission of a second test packet signal to the credit flow section 104. Thereby, first test packet signals are assisted by the second test packet signal.

During transmission of the second test packet signal, the increment signal generator 15 sends the increment signal P_OVL_VC0_INC and P_OVL_VC1_INC to the VC buffer credit counters 21 b (VC0 and VC1). The increment signal generator 15 also sends the increment signal P_OVL_VC0PKT_INC and P_OVL_VC1 PKT_INC to the packet credit counters 21 c (VC0 and VC1). Additionally, the increment signal generator 15 sends the increment signal P_OVL_RBUF_INC to the retransmission buffer credit counter 21 a. In response to these increment signals, the credit values in the respective credit counters 21 are incremented.

In response to these increment signals, the respective credit counters 21 are incremented when a second test packet signal is sent from the credit flow section 104, in the manner similar to when a first test packet signal is sent.

During the output of the second test packet signal, the second inhibitor 142 (the test signal arbiter 14) inhibits a first test packet signal from being input to the credit flow section 104, by sending the signal P_OVL_BUSY to the switch circuit 211, which prevents any superimposition, interference and the like between the first and second test packet signals.

As described above, during a load test on the processor 100, while no first test packet signal is being input to the credit flow section 104, the test signal generation circuit 11 assists a test packet signal by sending a second test packet signal to the credit flow section 104.

The second test packet signal, similar to a first test packet signal, is stored-and-forwarded to the retransmission buffer 22, wherein a CRC is appended and CLK signals are switched in different frequencies by the transmission controller 23, for transmitting the second test packet signal on the physical layer. Thereafter, the second test packet signal is sent from the port P01 or the port P02.

Hereinafter, first and second test packet signals may be simply referred to as test packet signals.

In the receiving processor 100 (100-1), the reception controller 33 switches CLK signals in different frequencies for the test packet signal. Thereafter, the DLLP checker 31 checks the sequence number in the received test packet signal, and sends the sequence number of the received packet to the sender processor 100, as an ACK.

When the reception of a packet fails (due to a CRC error or the like), the DLLP checker 31 sends the sequence number of a packet immediately before the failed packet, as an NACK, to a sender processor 100.

If an NACK is received from the VC buffer 32 in the counterpart processor 100, the credit flow section 104 in a sender processor 100-0 performs retransmission processing of the packet.

Then, if a busy state is detected in any of the retransmission buffer credit counter 21a, the VC buffer credit counter 21 b, and the packet credit counter 21 c during the load test on the processor 100, for example, corresponding processing, such as a notification, error logging, and inhibition of packet transmission, is performed.

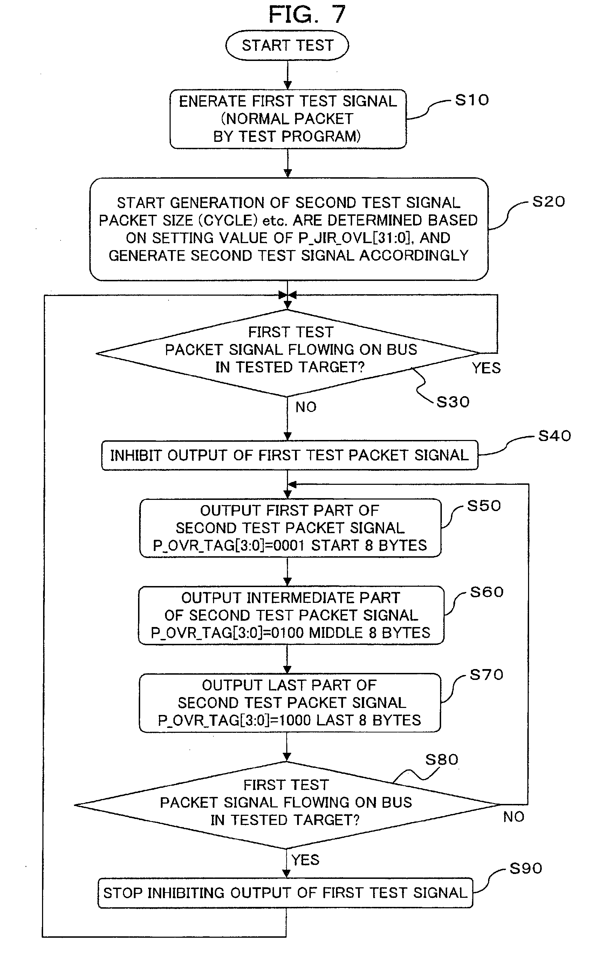

Next, processing during a load test in a processor 100 as an example of an embodiment will be described with reference to the flowchart depicted in FIG. 7 (Steps S10 - S90).

When an input instructing an execution of a load test is received through an input device, e.g., a keyboard, which is not illustrated, a load test is initiated in this processor 100.

The CPU core 101 executes a test signal output program and outputs a first test packet signal (Step S10).

Further, in the test signal generation circuit 11, the second test signal output terminal 13 starts to output a second test packet signal (Step S20). The second test signal output terminal 13 determines a packet size (cycle) and the like for second test packet signals, based on the setting value in the signal P_JIR_OVL input from an input port, and generates a second test packet signal.

The test signal arbiter (decision maker) 14 determines whether or not a first test packet signal is flowing through a tested bus by checking a signal P_PRI (Step S30). If no first test packet signal is flowing through the tested bus (refer to the NO route from Step S30), the second inhibitor 142 inhibits the first test packet signal from being output to the tested bus (Step S40).

Thereafter, the test signal generation circuit 11 outputs the second test packet signal. The test signal generation circuit 11 outputs pattern signals of a start 8-byte part of the second test packet signal, indicated by the signal P_OVL_TAG[3:0] = 0001 (Step S50).

The test signal generation circuit 11 then outputs pattern signals of an intermediate 8-byte part(s) of the second test packet signal, indicated by the signal P_OVL_TAG[3:0] = 0100 (Step S60). The intermediate 8-byte part(s) of the second test packet signal are sent successively in the number, depending on the packet size determined in Step S20.

The test signal generation circuit 11 then outputs pattern signals of a last 8-byte part of the second test packet signal, indicated by the signal P_OVL_TAG[3:0] = 1000 (Step S70). In the above Steps S50 - S70, the second test packet signal is output.

Otherwise, if a first test packet signal is flowing through the tested bus (refer to the YES route from Step S30), Step S30 is repeated until no first test packet signal flows through the tested bus any more.

Thereafter, the test signal arbiter 14 determines that a first test packet signal is flowing through the tested bus by checking the signal P_PRI (Step S80). If no first test packet signal is flowing through the tested bus (refer to the NO route from Step S80), the flows returns to S50 wherein output of a second test packet signal is repeated.

Otherwise, if a first test packet signal is flowing through the tested bus (refer to the YES route from Step S80), the second inhibitor 142 stops inhibiting the first test packet signal from being output to the tested bus (Step S90) and returns to Step S30.

As described above, in accordance with an processor 100 as an example of an embodiment, a load test can be performed efficiently by generating a second test packet signals that assist to first test packet signals and sending it to the credit flow section 104. More specifically, even if a load given by first test packet signals output by the CPU core 101 is not sufficient during a load test, a second test packet signal generated by the test signal generation circuit 11 can provide a sufficient load on the credit flow section 104.

In this case, the increment signal generator 15 increments the credit values in the respective credit counters 21 in sync with the second test packet signal, which ensures that an appropriate credit flow control is also made on the second test packet signal.

In the test signal generation circuit 11, input timing, packet types, and the like, of second test packet signals can be easily set to any desired values by setting of the value of the signal P_JIR_OVL. In other words, desired second test packet signals can be easily generated and make them being input to the credit flow section 104.

Further, the second test packet signal is deleted in a receiving processor 100 once it passes through the credit flow section 104. This permits generation of a second test packet signal without knowing the real memory space, thereby allowing it to coexist with a test program in software that outputs a first test packet signal. As described above, coexist with software can help to increase the data transfer quantity and the number of patterns during a load test, thereby increasing the test coverage ratio and shortening the test procedures.

Further, a load test using a second test packet signal by the test signal generation circuit 11 may be executed not only during the manufacturing stage but also at every system power-ons. This can help to indentify an initial failure and a aging failures of packet signal transmission paths in an early stage.

Stated differently, it is possible to verify routing in a router section and the credit flow section 104 in a processor system 1.

The disclosed technique is not limited to the embodiment described above, and various modifications may be made without departing from the scope of the present embodiment.

For example, although the number of input ports for first test packet signals is four and the number of VCs is 2 in the above-described embodiment, this is not limiting. More specifically, the number of input ports for first test packet signals and/or the number of VCs can be increased with minimum modifications.

Further, although a load test using first test packet signals output by the CPU core 101 and a second test packet signal generated by the test signal generation circuit 11 has been described in the above-described embodiment, this is not limiting. In other words, a load test may be performed using only a second test packet signal generated by the test signal generation circuit 11. This is convenient since a load test can be performed without any intervention of the CPU core 101, enabling exploiting of the CPU core 101 for other purposes.

The embodiment may be practiced or manufactured by those ordinary skilled in the art with reference to the above disclosure.

The following appendices are disclosed for the embodiment set forth above.

### (Appendix 1)

A processing apparatus comprising:
a counter that counts a count value used for a flow control;
a first test signal output terminal that outputs a plurality of first test signals continuously in response to a test start instruction;
a decision maker that determines whether or not the first test signals are being input to a tested portion;
a second test signal output terminal that outputs a second test signal if the decision maker determines that the first test signals are not being input to the tested portion; and
an increment processor that increments a count value stored in the counter in sync with the second test signal.

### (Appendix 2)

The processing apparatus according to appendix 1, further comprising a test signal arbiter that allows the second test signal to be output when the first test signals are not being output.

### (Appendix 3)

The processing apparatus according to appendix 2, wherein the test signal arbiter comprises:
a first inhibitor that inhibits the output of the second test signal by the second test signal generator while the first test signal output terminal is inputting the first test signals to the tested portion; and
a second inhibitor that inhibits the input of the first test signals to the tested portion while the second test signal output terminal is outputting the second test signal.

### (Appendix 4)

The processing apparatus according to any one of appendices 1 to 3, further comprising a signal information output that outputs signal information indicating whether either of the first test signals or the second test signal is being output.

### (Appendix 5)

A test signal generator comprising:
a first test signal receiver that receives first test signals continuously output from a first test signal output terminal in response to a test start instruction;
a second test signal output terminal that outputs a second test signal when the first test signal receiver is not receiving the first test signals; and
an increment processor that increments a count value stored by a counter that counts the count value used for flow control, in sync with the second test signal.

### (Appendix 6)

The test signal generator according to appendix 5, further comprising a test signal arbiter that allows the second test signal to be output when the first test signals are not being output.

### (Appendix 7)

The test signal generator according to appendix 6, wherein the test signal arbiter comprises:
a first inhibitor that inhibits the output of the second test signal by the second test signal generator while the first test signal output terminal is inputting the first test signals to the tested portion; and
a second inhibitor that inhibits the input of the first test signals to the tested portion while the second test signal output terminal is outputting the second test signal.

### (Appendix 9)

A method of generating a test signal comprising:
receiving a plurality of first test signals continuously output from a first test signal output terminal in response to a test start instruction;
determining whether or not the first test signals are being input to a tested portion;
outputting a second test signal when the first test signals are not received; and
incrementing a count value stored by a counter that counts the count value used for flow control, in sync with the second test signal.

### (Appendix 10)

The method according to appendix 8, further comprising allowing the second test signal to be output when the first test signals are not being output.

### (Appendix 11)

The method according to appendix 10, wherein the allowing comprising:
inhibiting the output of the second test signal by the second test signal output terminal while the first test signal output terminal is inputting the first test signals to the tested portion, whereas inhibiting the input of the first test signals to the tested portion while the second test signal output terminal is outputting the second test signal.

## Claims

1. A test signal generator comprising:
a first test signal receiver (100) for receiving first test signals continuously output from a first test signal output terminal (20) in response to a test start instruction;
a second test signal output terminal (13) for outputting a second test signal when the first test signal receiver is not receiving the first test signals; and
an increment processor (15) for incrementing a count value stored by a counter (21) for counting the count value used for flow control, when the second test signal is output.

2. The test signal generator to claim 1, further comprising a test signal arbiter (14) for arbitrating to allow the second test signal to be output when the first test signals are not being output.

3. The test signal generator according to claim 2, wherein the test signal arbiter (14) comprises:
a first inhibitor (141) for inhibiting the output of the second test signal by the second test signal output terminal (13) while the first test signal output terminal (20) is inputting the first test signals to the test signal receiver (100); and
a second inhibitor (142) for inhibiting the input of the first test signals to the test signal receiver (100) while the second test signal output terminal (13) is outputting the second test signal.

4. A method of generating a test signal comprising:
receiving a plurality of first test signals continuously output from a first test signal output terminal (20) in response to a test start instruction;
determining whether or not the first test signals are being input to a test signal receiver (100);
outputting a second test signal when the first test signals are not received;
incrementing a count value stored by a counter (21) that counts the count value used for flow control, when the second test signal is output.

5. The method according to claim 4, further comprising arbitrating to allow the second test signal to be output when the first test signals are not being output.

6. The method according to claim 5, wherein the arbitrating comprises:
inhibiting the output of the second test signal by the second test signal output terminal while the first test signal output terminal (20) is inputting the first test signals to the test signal receiver (100); and
inhibiting the input of the first test signals to the test signal receiver (100) while the second test signal output terminal (13) is outputting the second test signal.

## Patentansprüche

1. Testsignalgenerator, umfassend:
- einen ersten Testsignalempfänger (100) zum Empfangen erster Testsignale, die ständig von einem ersten Testsignal-Ausgangsanschluss (20) als Reaktion auf eine Teststartanweisung ausgegeben werden;
- einen zweiten Testsignal-Ausgangsanschluss (13) zum Ausgeben eines zweiten Testsignals, wenn der erste Testsignälempfänger die ersten Testsignale nicht empfängt; und
- einen Inkrementierprozessor (15) zum Inkrementieren eines Zählwertes, der von einem Zähler (21) gespeichert wird, um den Zählwert zu zählen, der zur Flussregelung verwendet wird, wenn das zweite Testsignal ausgegeben wird.

2. Testsignalgenerator nach Anspruch 1, ferner umfassend einen Testsignalvermittler (14) zum Vermitteln, damit das zweite Testsignal ausgegeben werden kann, wenn die ersten Testsignale nicht ausgegeben werden.

3. Testsignalgenerator nach Anspruch 2, wobei der Testsignalvermittler (14) Folgendes umfasst:
- einen ersten Inhibitor (141) zum Hemmen der Ausgabe des zweiten Testsignals durch den zweiten Testsignal-Ausgangsanschluss (13), während der erste Testsignal-Ausgangsanschluss (20) die ersten Testsignale in den Testsignalempfänger (100) eingibt; und
- einen zweiten Inhibitor (142) zum Hemmen der Eingabe der ersten Testsignale in den Testsignalempfänger (100), während der zweite Testsignal-Ausgangsanschluss (13) das zweite Testsignal ausgibt.

4. Verfahren zum Generieren eines Testsignals, umfassend folgende Schritte:
- Empfangen einer Vielzahl von ersten Testsignalen, die ständig von einem ersten Testsignal-Ausgangsanschluss (20) als Reaktion auf eine Teststartanweisung ausgegeben werden;
- Bestimmen, ob die ersten Testsignale in einen Testsignalempfänger (100) eingegeben werden oder nicht;
- Ausgeben eines zweiten Testsignals, wenn die ersten Testsignale nicht empfangen werden;
- Inkrementieren eines Zählwertes, der von einem Zähler (21) gespeichert wird, der den Zählwert zählt, der zur Flussregelung verwendet wird, wenn das zweite Testsignal ausgegeben wird.

5. Verfahren nach Anspruch 4, ferner umfassend das Vermitteln, damit das zweite Testsignal ausgegeben werden kann, wenn die ersten Testsignale nicht ausgegeben werden.

6. Verfahren nach Anspruch 5, wobei das Vermitteln folgende Schritte umfasst:
- Hemmen der Ausgabe des zweiten Testsignals durch den zweiten Testsignal-Ausgangsanschluss, während der erste Testsignal-Ausgangsanschluss (20) die ersten Testsignale in den Testsignalempfänger (100) eingibt; und
- Hemmen der Eingabe der ersten Testsignale in den Testsignalempfänger (100), während der zweite Testsignal-Ausgangsanschluss (13) das zweite Testsignal ausgibt.

## Revendications

1. Générateur de signaux d'essai comprenant :
un premier récepteur de signaux d'essai (100) pour recevoir des premiers signaux d'essai fournis en sortie en continu par un premier terminal de sortie de signaux d'essai (20) en réponse à une instruction de début d'essai ;
un second terminal de sortie de signaux d'essai (13) pour fournir en sortie un second signal d'essai lorsque le premier récepteur de signaux d'essai ne reçoit pas les premiers signaux d'essai ; et
un processeur d'incrémentation (15) pour incrémenter une valeur de comptage enregistrée par un compteur (21) pour compter la valeur de comptage utilisée pour le contrôle de flux, lorsque le second signal d'essai est fourni en sortie.

2. Générateur de signaux d'essai selon la revendication 1, comprenant en outre un arbitre de signaux d'essai (14) pour effectuer un arbitrage pour permettre au second signal d'essai d'être fourni en sortie lorsque les premiers signaux d'essai ne sont pas fournis en sortie.

3. Générateur de signaux d'essai selon la revendication 2, dans lequel l'arbitre de signaux d'essai (14) comprend :
un premier inhibiteur (141) pour inhiber la sortie du second signal d'essai par le second terminal de sortie de signaux d'essai (13) pendant que le premier terminal de sortie de signaux d'essai (20) entre les premiers signaux d'essai dans le récepteur de signaux d'essai (100) ; et
un second inhibiteur (142) pour inhiber l'entrée des premiers signaux d'essai dans le récepteur de signaux d'essai (100) pendant que le second terminal de sortie de signaux d'essai (13) fournit en sortie le second signal d'essai.

4. Procédé de génération d'un signal d'essai, comprenant :
la réception d'une pluralité de premiers signaux d'essai fournis en sortie en continu par un premier terminal de sortie de signaux d'essai (20) en réponse à une instruction de début d'essai ;
la détermination du fait que les premiers signaux d'essai sont ou non appliqués à l'entrée d'un récepteur de signaux d'essai (100) ;
la fourniture en sortie d'un second signal d'essai lorsque les premiers signaux d'essai ne sont pas reçus ;
l'incrémentation d'une valeur de comptage enregistrée par un compteur (21), qui compte la valeur de comptage utilisée pour le contrôle de flux, lorsque le second signal d'essai est fourni en sortie.

5. Procédé selon la revendication 4, comprenant en outre un arbitrage pour permettre au second signal d'essai d'être fourni en sortie lorsque les premiers signaux d'essai ne sont pas fournis en sortie.

6. Procédé selon la revendication 5, dans lequel l'arbitrage comprend :
l'inhibition de la sortie du second signal d'essai par le second terminal de sortie de signaux d'essai pendant que le premier terminal de sortie de signaux d'essai (20) entre les premiers signaux d'essai dans le récepteur de signaux d'essai (100) ; et
l'inhibition de l'entrée des premiers signaux d'essai dans le récepteur de signaux d'essai (100) pendant que le second terminal de sortie de signaux d'essai (13) fournit en sortie le second signal d'essai.
